(19)

Europäisches
Patentamt
European
Patent Office
Office européen
des brevets

(11) EP 2 808 871 A1

(12) EUROPEAN PATENT APPLICATION

(43) Date of publication:
03.12.2014 Bulletin 2014/49

(51) Int Cl.:
G11B 27/34 (2006.01)     G11B 27/36 (2006.01)

(21) Application number: 13190968.1

(22) Date of filing: 30.10.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 31.05.2013  JP 2013115310

(71) Applicant: Kabushiki Kaisha Toshiba
Tokyo 105-8001 (JP)

(72) Inventors:
• Morioka, Yasuhiro
  Tokyo, 105-8001 (JP)
• Fujiwara, Yoshinobu
  Tokyo, 105-8001 (JP)
• Nakajima, Atsushi
  Tokyo, 105-8001 (JP)

(74) Representative: Henkel, Breuer & Partner
Patentanwälte
Maximiliansplatz 21
80333 München (DE)

(54) **Reproduction apparatus, reproduction method, and reproduction program**

(57) A reproduction apparatus (101) is provided, comprising: a selector (112) configured to select content, a reproducing module (113) configured to reproduce the content, and an output module (119, 114) configured to output a guide indicative of a relationship between an estimated time of reproduction completion of the content and a scheduled time of a schedule in response to the content reproduction.

FIG. 4

**Description**

Embodiments described herein relate generally to a reproduction apparatus, reproduction method, and reproduction program.

A reproduction apparatus configured to generate content such as moving pictures, music, or the like displays a progress bar displaying indicative of reproduction status of a content currently being played in accordance with the reproduction of the content. The reproduction apparatus displays the progress bar displaying in a reproduction screen continuously or temporarily corresponding to a user's operation. The progress bar displaying indicates a progression status of reproduction of content having a temporal length. The progress bar displaying is represented as, for example, a bar having a certain lateral length and the entire length thereof indicates the entire playing time of the content. When the content reproduction progresses, a part of the progress bar displaying is represented in a first color indicative of "already reproduced" and the other part of the progress bar displaying is represented in a second color indicative of "not yet reproduced". A user can recognize the progression status of the content reproduction immediately from the progress bar displaying.

Meanwhile, in recent years, schedule management performed by an electronic apparatus has become popular. The electronic apparatus, for example, pops up a notice when a scheduled time comes.

During the reproduction of the content, a user can ascertain the reproduction status of the content from the progress bar displaying; however, the user has difficulty in ascertaining both reproduction status and user's schedule from the progress bar displaying. Thus, a technique to ascertain the schedule corresponding to the user's content viewing is demanded.

In the meantime, if the system resource is increased, this may result in an increase in the manufacturing cost. In addition, during normal use, a significant portion of the system resource may become redundant.

An object of the present embodiments, provided is a reproduction apparatus, reproduction method, and reproduction program which output a schedule corresponding to content reproduction.

A general architecture that implements the various features of the embodiments will now be described with reference to the drawings. The drawings and the associated descriptions are provided to illustrate the embodiments and not to limit the scope of the invention.

FIG. 1 is an exemplary diagram showing an example of a progress bar displaying according to an embodiment;

FIG. 2 is an exemplary diagram showing an example of a seek bar displaying according to an embodiment;

FIG. 3 is an exemplary diagram showing an example of a reproduction screen according to an embodiment;

FIG. 4 is an exemplary diagram showing an example of basic functions of the reproduction apparatus according to an embodiment;

FIG. 5 is an exemplary diagram showing an example of working mechanism of the reproduction apparatus according to an embodiment;

FIG. 6 is an exemplary diagram showing an example of progress bar displaying displayed by the reproduction apparatus according to an embodiment;

FIG. 7 is an exemplary diagram showing an example of progress bar displaying displayed by the reproduction apparatus according to an embodiment;

FIG. 8 is an exemplary diagram showing an example of entire functions (including a schedule notification function) of the reproduction apparatus according to an embodiment;

FIG. 9 is an exemplary diagram showing an example of working mechanism of the reproduction apparatus according to an embodiment;

FIG. 10 is an exemplary diagram showing an example of progress bar displaying (including estimated time of completion) displayed by the reproduction apparatus according to an embodiment;

FIG. 11 is an exemplary diagram showing an example of progress bar displaying (including schedules) displayed by the reproduction apparatus according to an embodiment; and

FIG. 12 is an exemplary diagram showing an example of progress bar displaying (including schedules) displayed by the reproduction apparatus according to an embodiment.

Various embodiments will be described hereinafter with reference to the accompanying drawings.

In general, according to one embodiment, a reproduction apparatus characterized by comprising: a selector configured to select content; a reproducing module configured to reproduce the content; and an output module configured to output a guide indicative of a relationship between a first estimated time of reproduction completion of the content and a first scheduled time of a first schedule in response to the content reproduction.

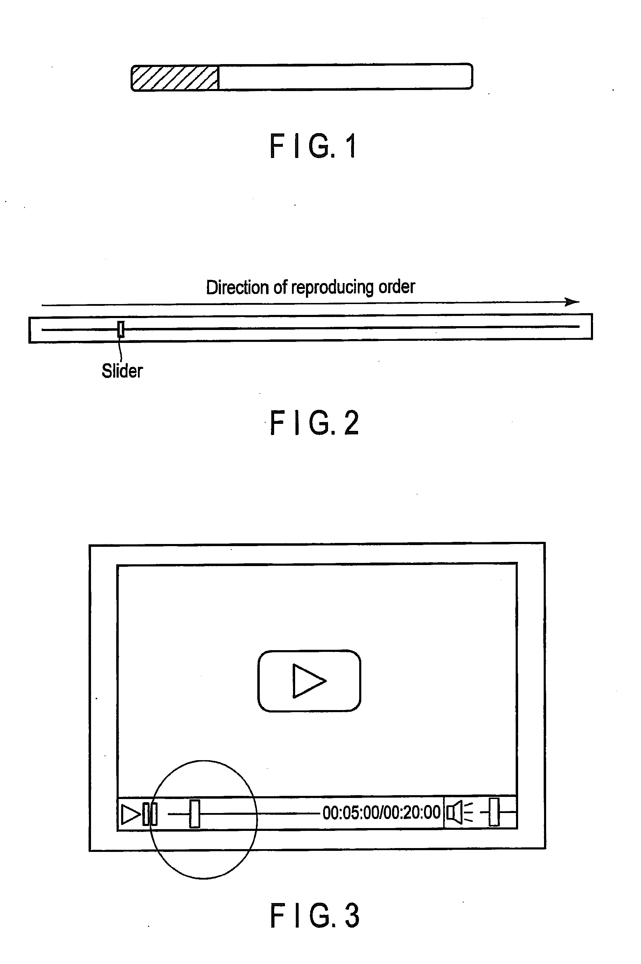

FIG. 1 shows an example of a progress bar displaying. The progress bar displaying corresponds to content having a temporal length and indicates progression status of reproduction (reproduction guide) and the like. The progress bar displaying is represented as, for example, a bar having a certain lateral length and the entire length thereof indicates the entire playing time of the content. When the content reproduction progresses, a part of the progress bar displaying is represented in a first color indicative of "already reproduced" and the other part of the progress bar displaying is represented in a second color indicative of "not yet reproduced".

FIG. 2 shows an example of a progress bar displaying referred to as a seek bar displaying. The seek bar displaying includes a slider which is a small vertically-oriented rectangle. The position of the slider in the seek bar indicates the rate of progress of the content reproduction. The slider reacts to a mouse operation or touch operation and moves rightward or leftward along the seek bar, and the position of the slider corresponds to a position currently being reproduced.

FIG. 3 shows an example of a reproduction screen of the content. As shown in FIG. 3, the reproduction apparatus displays, corresponding to the content reproduction, the progress bar displaying or seek bar displaying together with content image. The progress bar displaying or seek bar displaying indicates the rate of progress of the content reproduction at that point of time (present time) and the position currently being reproduced (elapsed time). Furthermore, the reproduction apparatus may display the remaining time of the content together with the progress bar displaying or seek bar displaying.

From glancing at the reproduction screen of the aforementioned reproduction apparatus, a user cannot ascertain whether or not the content will finish before a certain time. The user must ascertain whether or not the content will finish before a certain scheduled event, for example, a time to go out by making a mental calculation based on the scheduled time to go out and the remaining time of the content. Such a state causes or can cause the possibility that the user cannot fully enjoy the content because of mental calculation, a possibility that the content will not finish by the scheduled time because of the user's miscalculation, and the possibility that the content will not be suspended at a convenient point during the reproduction.

The reproduction apparatus of the present embodiment comprises a schedule notification function and outputs a user's schedule in response to reproduction of content selected by the user. That is, in response to the content reproduction, the reproduction apparatus outputs a guide indicative of a relationship between an expected time of termination of the content and the user's schedule (first scheduled time). Thus, the above-mentioned problem can be solved.

The termination of the content reproduction can be expected by the following times, for example:

(1) Expected time of termination when content is played at a standard playing speed (that is, normal speed or first playing speed);
(2) Time to start scheduled storing (scheduled recording) of content;
(3) Time to start scheduled reproduction (scheduled viewing) of content;
(4) Time to start any other functions by which the reproduction apparatus cannot continue the content reproduction;
(5) A certain period having a predetermined start point and intervals such as every hour on the hour or every 0, 15, 30, and 45 minutes after the hour;
(6) Time to start a scheduled plan such as going out or taking a bath recorded in a calendar; and
(7) Time to start any other timer-scheduled activities.

In the times of (2), (3), (4) and (7), the reproduction apparatus may not be able to continue the content reproduction depending on the performance of the reproduction apparatus.

The times of (1) and (5) are used by the user as a guide to recognize the progression of the content reproduction again and thus, the reproduction apparatus can continue the content reproduction in the times of (1) and (5).

The time of (6) is obtained from a calendar function of the reproduction apparatus or of an external device associated with the reproduction apparatus, and therein, the reproduction apparatus may not continue the content reproduction depending on the user's convenience.

In response to the user's operation of: fast-forwarding (playing the content at the speed faster than the standard playing speed); fast-reversing (playing the content in reverse at the speed faster than the standard playing speed); and skipping or the like, the reproduction apparatus of the present embodiment can play the content on fast-forward, fast-backward and skip modes. By combining these operations, the user can change the remaining time of the content at a certain point of time. Specifically, the user may shorten the remaining time of the content at a certain point of time by fast-forwarding or skipping a part of the content which is of no interest to the user.

The reproduction apparatus of the present embodiment displays the progress bar displaying or the like at the time of reproducing the content and indicates "the estimated time of completion" or "whether or not the reproduction finishes before a scheduled time". Thus, by simply referring to the display, the user may easily acknowledge whether or not the content reproduction should be shortened by fast-forwarding or skipping so that the content reproduction will finish by the scheduled time or will progress to a point at which it is convenient to suspend reproduction.

The operations of the reproduction apparatus of the present embodiment are summarized as follows. The reproduction apparatus of the present embodiment can output (display) various guides by adopting the following operations singly or in combination:

(a) The reproduction apparatus displays the estimated time of completion of the content reproduction at a certain point of time (present time) during the reproduction, the reproduction apparatus may display an estimated remaining time of the content;
(b) The reproduction apparatus determines "whether or not the estimated time of completion of the content at a certain point of time (present time) is before a certain scheduled time" and displays the result;
(c) The reproduction apparatus determines "whether or not the estimated time of completion of the content at a certain point of time (present time) is before a certain scheduled time" during the reproduction and, if the estimated time of completion is determined after the certain scheduled time, the reproduction apparatus displays a notice based on a difference between the estimated time of completion and the certain scheduled time; and
(d) The reproduction apparatus determines "whether or not the estimated time of completion of the content at a certain point of time (present time) is before a certain scheduled time" during the reproduction, and, if the estimated time of completion is determined before the certain scheduled time, the reproduction apparatus displays a notice based on a difference between the estimated time of completion and the certain scheduled time.

The above-mentioned "a certain scheduled time" will be any one of the following:

(1) Expected time of termination when content is played at a standard playing speed (that is, normal speed or first playing speed);
(2) Time to start scheduled recording (scheduled recording) of content;
(3) Time to start scheduled reproduction (scheduled viewing) of content;
(4) Time to start any other functions by which the reproduction apparatus cannot continue the content reproduction;
(5) A certain period having a predetermined start point and intervals such as every hour on the hour or every 0, 15, 30, and 45 minutes after the hour;
(6) Time to start a scheduled plan such as going out or taking a bath recorded in a calendar; and
(7) Time to start any other timer-scheduled activities including that of the devices associated with the reproduction apparatus.

The reproduction apparatus of the present embodiment can output (display) various guides by adopting the following operations singly or in combination:

(e) The reproduction apparatus displays zero, or one or more schedule as a certain schedule;
(f) The reproduction apparatus displays a mark indicative of the certain scheduled time as the notice, the mark displayed to correspond to the progress bar displaying. Furthermore, as the mark, the reproduction apparatus displays any one of or a combination of the mark, time and title to correspond to the progress bar displaying; and
(g) The reproduction apparatus displays a time mark corresponding to one ore more certain events to correspond to the progress bar displaying.

The reproduction apparatus of the present embodiment comprises the following structures. The structures are:

- Content selector;
- Content length (reproduction time) obtainer configured to obtain the length from the content;
- Content reproducing module;
- Content position currently being reproduced acquirer;
- Timer;
- Calculator configured to calculate estimated time of completion of content reproduction from the content position currently being reproduced, length and present time;
- Position currently being reproduced marker configured to determine a position of a mark on the position currently being reproduced from the length and position currently being reproduced of the content;
- Manager configured to manage schedule (event) information including a schedule start time;
- Schedule information acquirer;
- Scheduled time acquirer configured to acquire a scheduled time (schedule start time) from the schedule information;
- On-progress bar marker configured to determine a position of a mark on a progress bar displaying from the scheduled time of the schedule information;
- Displayed mark type determiner configured to compare the scheduled time of the schedule information to the estimated time of completion of the content and determine a displayed mark type of the scheduled event (Displayed mark type determiner configured to determine a displayed mark type based on whether or not the termination of reproduction is likely to be at the scheduled time);

- Schedule information mark determiner configured to determine a position of a mark of the schedule information from the estimated time of completion of the content and scheduled time of the schedule information;
- Position currently being reproduced mark displayer configured to display a mark of the position currently being reproduced on the progress bar displaying; and
- Scheduled event mark displayer configured to display a mark of the scheduled event on the progress bar displaying.

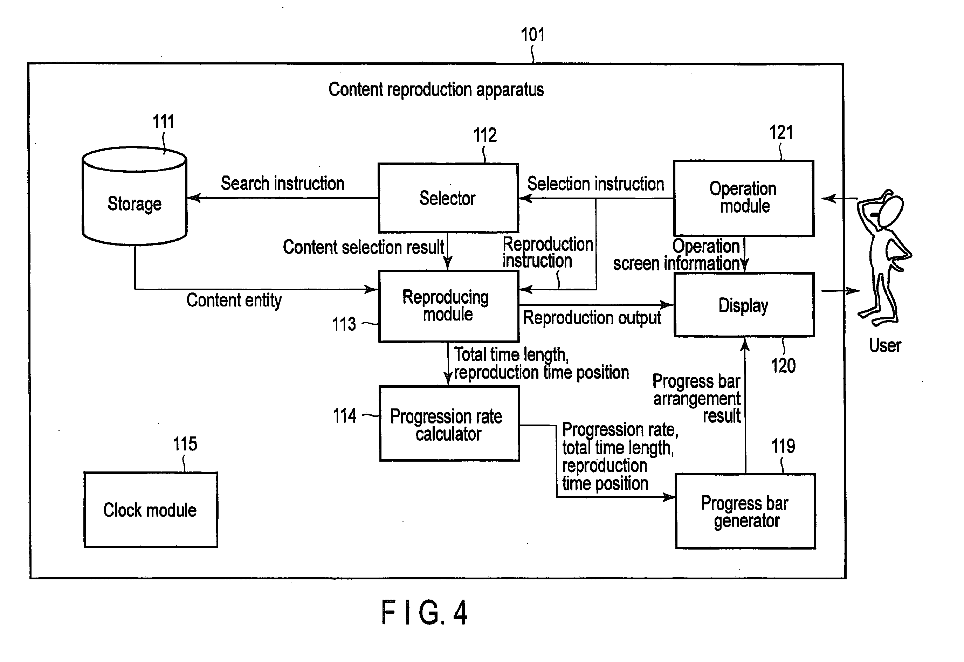

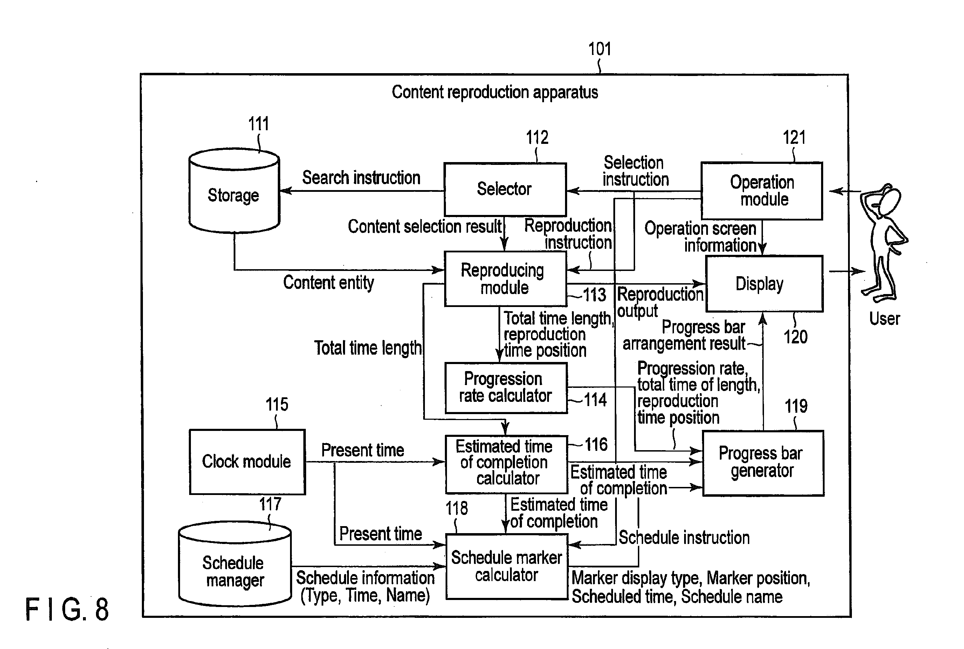

The structure of the reproduction apparatus of the present embodiment is now explained with reference to FIGS. 4 and 8. FIG. 4 illustrates a block diagram explaining an example of the basic functions of the reproduction apparatus of the present embodiment.

FIG. 8 illustrates a block diagram explaining an example of the entire functions (including schedule notification function) if the reproduction apparatus of the present embodiment. With the features of the reproduction apparatus illustrated in FIGS. 4 and 8, each of the above-mentioned structures can achieve the functions (including the schedule notification function).

The reproduction apparatus 101 comprises a storage 111, selector 112, reproducing module 113, rate of progress calculator 114, clock module 115, progress bar generator 119, display 120, and operation module 121.

The storage 111 stores and maintains the content to be reproduced. The storage 111 is, for example, a hard disk or SSD. The storage 111 may be accessible via a LAN or the Internet.

The selector 112 selects content stored in the storage 111 in response to an operation to the operation module 121.

The reproducing module 113 reproduces the content selected by the selector 112. The reproducing module 113 extracts a temporal length of the content (hereinafter referred to as "total length of time") and generates information of reproduction time (hereinafter referred to as "position currently being reproduced") counted from the start of the content to a certain point of time (present time) at a normal reproduction speed based on the progression of the reproduction.

The rate of progress calculator 114 calculates reproduction rate of progress (expressed as a percentage) from the total length of time (measured in seconds) and position currently being reproduced (measured in seconds) of the content extracted or generated by the reproducing module 113. The calculation is based on the following equation

$$\text{``reproduction rate of progress''} = (\text{position currently being reproduced}) / (\text{total length of time}).$$

The clock module 115 functions as a clock and provides the other functional parts with time and further provides the other functional part with triggers activating specific processes.

The progress bar generator 119 generates a reproduction guide (progress bar or seek bar) corresponding to the content reproduction. The progress bar generator 119 generates, for example, the progress bar displaying and display information to a counter adjacent thereto. The progress bar generator 119 determines a position of a slider on the progress bar displaying based on the rate of progress of the content reproduction calculated by the rate of progress calculator 114. The progress bar generator 119 determines and allocates the content of the display of the counter to match the total length of time and position currently being reproduced calculated by the reproducing module 113. The counter is displayed to include at least one of the following patterns:

"position currently being reproduced" / "total length of time";
"remaining reproduction time" / "total length of time"; and
"position currently being reproduced" / "remaining reproduction time".

The display 120 outputs (displays) the result of the allocation above.

The display 120 displays a screen (e.g. FIG. 3) including an output of content image reproduced by the reproducing module 113, output of structural information of the progress bar displaying indicative of the progression information of the content reproduction generated by the progress bar generator 119, and output of operation input user interface (operation screen information) associated with the operation module 121.

The operation module 121 receives a user's operation such as a content selection operation to the selector 112, content reproduction operation (reproduction, pause, fast-forward, reverse, seek, and change of reproduction speed, and the like) to the reproducing module 113, and selection operation of display content (selecting a counter display format and the like) of the progress bar to the progress bar generator 119. The operation module 121 then transfers the operations as operation instructions to each of the selector 112, reproducing module 113, and progress bar generator 119. A part of the operation may be performed based on predetermined rules instead of the user's instructions.

With the above-mentioned structures functioning individually, the reproduction apparatus 101 selects the content based on the user's operation, reproduces the selected content, outputs (displays) the reproduction screen including the content image, and further outputs (displays) the reproduction guide (progress bar displaying, and the like) indicating the progression status of the reproduction corresponding to the content reproduction. That is, the reproduction screen includes the content image and reproduction guide.

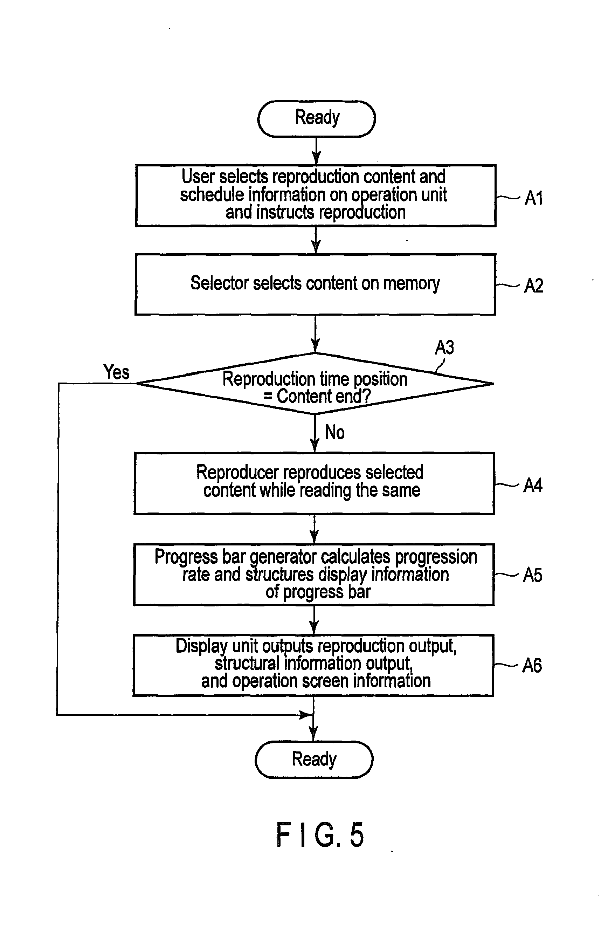

FIG. 5 illustrates a flowchart illustrating an example of the working mechanism of the reproduction apparatus 101.

The user selects the content to be reproduced via the operation module 121 and instructs the reproduction of the selected content [A1]. The selector 112 selects the content on the storage 111 [A2]. The reproducing module 113 determines whether or not the position currently being reproduced of the selected content is at the end of the content [A3]. If the time position currently being reproduced has not yet arrived at the end of the content [A3-NO], the process of [A4] is then performed. Otherwise, the reproduction is terminated.

The reproducing module 113 reads and reproduces the selected content at the same time [A4]. The reproducing module 113 extracts the total length of time of the content and the position currently being reproduced at that point of time (present time). The rate of progress calculator 114 calculates the rate of progress of the reproduction and the progress bar generator 119 structures the display information of the progress bar based on the rate of progress of the reproduction [A5]. The display 120 displays a screen including an output of content image reproduced by the reproducing module 113, output of structural information of the progress bar displaying indicative of the progression information of the content reproduction generated by the progress bar generator 119, and output of operation input user interface (operation screen information) associated with the operation module 121. Here, the speaker may output information related to the above-mentioned outputs [A5].

To describe a display example of the progress bar displaying, the following conditions are given.

The reproduction apparatus 101 selects content of 20 minutes duration in response to a user's operation.

The reproduction apparatus 101 starts the reproduction of the selected content at 01:00 p.m. from the start thereof at the normal speed.

The user has a schedule to go out at 01:15 p.m., and corresponding to this schedule, the reproduction apparatus 101 registers (manages) a schedule including expected time of start of 01:15 p.m. therein. The reproduction apparatus 101 can output (display) the registered schedule via a calendar display function or the like.

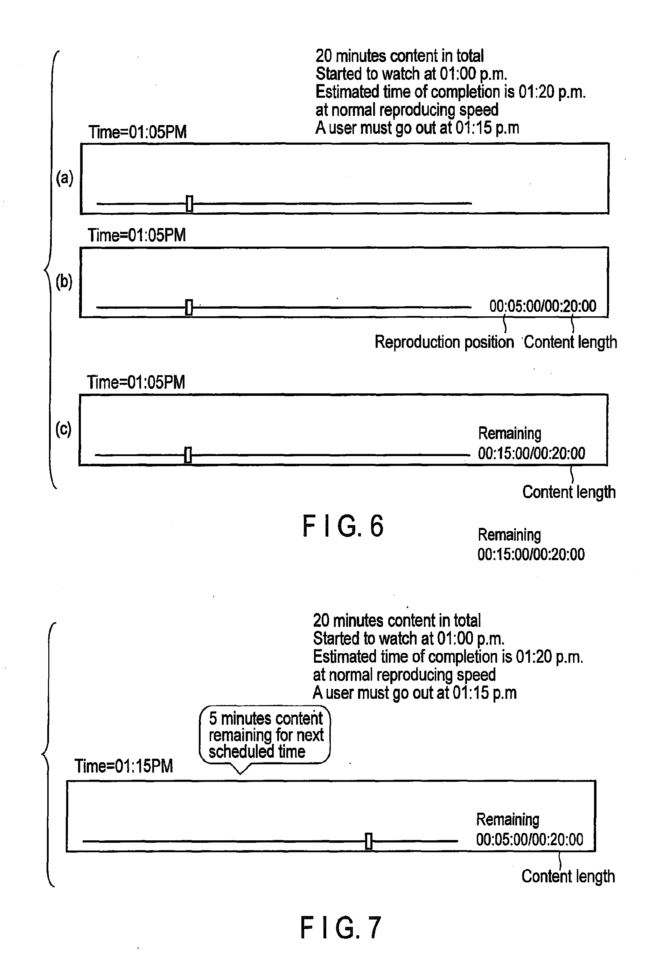

Here is considered a case where, at the point of time of 01:05 p.m., the reproduction apparatus 101 is continuing the content reproduction at the normal speed and displaying the progress bar displaying or seek bar displaying together with the reproduction image of the content. FIG. 6 (FIGS. 6(a), 6(b) and 6(c)) illustrates display examples of the seek bar at 01:05 p.m. The reproduction apparatus 101 uses the seek bar or the like to display the reproduction rate of progress (position currently being reproduced) as shown in FIG. 6(a) or the reproduction rate of progress (position currently being reproduced) as shown in FIG. 6(b) together with reproduced time and total length of time. The reproduction apparatus 101 displays the reproduction rate of progress (reproduction production) by the seek bar together with the remaining time and total length of time as shown in FIG. 6(c).

The reproduction apparatus 101 then continues the content reproduction at the normal speed to display the content reproduction image together with the progress bar displaying or seek bar displaying. FIG. 7 illustrates a display example of the seek bar displaying on 01:15 p.m., which is the time to go out for the user. The user may stop the reproduction of the content by the reproduction apparatus 101 and quit viewing the content. Alternatively, the user may fail to notice the time to go out and may continue viewing the content without stopping the reproduction apparatus 101.

When the schedule notification function of the reproduction apparatus 101 is activated, the reproduction apparatus 101 outputs the schedule corresponding to the content reproduction. For example, the reproduction apparatus 101 manages (stores) one or more schedule and, based on the total length of time (reproduction time) and reproduction start time of the selected content, outputs (displays) information related to the content reproduction and selected schedule corresponding to the content reproduction. Alternatively, the reproduction apparatus 101 manages (stores) one or more schedule and, based on the total length of time (reproduction time) and reproduction start time of the selected content, detects a schedule which occurs during the content reproduction, and outputs (displays) information related to the content reproduction and selected schedule corresponding to the content reproduction.

Now, the schedule notification function is described in detail.

(Schedule notification function 1)

FIG. 8 is a block diagram explaining an example of the entire functions (including the schedule notification function) of the reproduction apparatus 101 of the present embodiment.

The reproduction apparatus 101 comprises the storage 111, the selector 112, the reproducing module 113, the rate of progress calculator 114, the clock module 115, the estimated time of completion calculator 116, the schedule manager 117, the schedule marker calculator 118, the progress bar generator 119, the display 120, and the operation module 121.

The storage 111 stores and maintains the content to be reproduced. The storage 111 is, for example, a hard disk or SSD. The storage 111 may be accessible via a LAN or the Internet.

The reproducing module 113 reproduces the content selected by the selector 112. The reproducing module 113 extracts a temporal length of the content (hereinafter referred to as "total length of time") and generates information of reproduction time (hereinafter referred to as "position currently being reproduced") counted from the start of the content to a certain point of time (present time) at a normal reproduction speed based on the progression of the reproduction.

The rate of progress calculator 114 calculates reproduction rate of progress (expressed as a percentage) from the total length of time (measured in seconds) and position currently being reproduced (measured in seconds) of the content extracted or generated by the reproducing module 113. The calculation is based on the following equation.

$$\text{``reproduction rate of progress''} = \text{(position currently being reproduced)} / \text{(total length of time)}.$$

The clock module 115 functions as a clock and provides the other functional parts with time and further provides the other functional part with triggers activating specific processes.

From the time at a certain point of time (present time) provided by the clock module 115, the total length of time of the content provided by the reproducing module 113, and the position currently being reproduced at that point of time (present time), the estimated time of completion calculator 116 calculates an expected time when the position currently being reproduced reaches the end of the content at the standard playing speed (that is, normal speed or first playing speed) at that point of time. The calculation is based on the following equation.

$$\text{``estimated time of completion''} = \text{(present time)} + \text{((total length of time)} - \text{(position currently being reproduced))}$$

The schedule manager 117 manages (stores) the schedule information.

The schedule information at least includes schedule type, schedule title, schedule start time (schedule start date). The schedule type includes the following:

(1) Expected time of termination when content is played at a standard playing speed (that is, normal speed or first playing speed);
(2) Time to start scheduled recording of content;
(3) Time to start scheduled reproduction (scheduled viewing) of content;
(4) Time to start any other functions by which the reproduction apparatus 101 cannot continue the content reproduction;
(5) A certain period having a predetermined start point and intervals such as every hour on the hour or every 0, 15, 30, and 45 minutes after the hour;
(6) Time to start a scheduled plan such as going out or taking a bath recorded in a calendar; and
(7) Time to start any other timer-scheduled activities including that of the devices associated with the reproduction apparatus.

The schedule manager 117 may manage (store) the schedule information and may access to an external device via the network to refer to the schedule information managed in the external device. That is, the schedule manager 117 can manage the schedule information stored in both reproduction apparatus 101 and external device.

The schedule marker calculator 118 determines whether or not the reproduction of the selected content is likely to be completed by a scheduled time (schedule start time) of certain schedule information, calculates a position of a schedule marker (rate of progress) corresponding to the certain information (calculates a position of the schedule marker to be displayed on the progress bar), and determines a type of the schedule marker to be displayed. The certain schedule information is one or more items of schedule information selected by the operation module 121, or one or more items of schedule information generated during the content reproduction, which is detected based on the total length of time of the selected content and present time. To determine whether or not the selected content is likely to be completed before the certain time, the following inequalities are used.

$$\text{``(estimated time of completion)} - \text{(scheduled time)''} \geq 0$$

Reproduction will be completed before scheduled time.

$$\text{``(estimated time of completion)} - \text{(scheduled time)"} < 0$$

Reproduction will not be completed before scheduled time.

The position of the schedule marker (rate of progress) on the progress bar is calculated based on the following equation.

$$\text{``(schedule marker position"} = (\text{(scheduled time)} - ((\text{estimated time of completion)} - \text{(total length of time))}) / \text{(total length of time)}.$$

If the schedule marker position is more than 1 (=100%), the scheduled time comes after the estimated time of completion.

If the schedule marker position results in a negative value, the scheduled time comes before the estimated start time when the content is played only at the normal speed. Since operations such as fast-forwarding, reversing, seeking, pausing, resuming may be adopted in addition to the reproduction at the normal speed and termination of the content, the time corresponding to the start point of the seek bar is strictly for an estimated value.

Whenever the schedule marker position is more than 1 or a negative value, there are several methods to display the schedule marker on the progress bar and any one of the methods may be chosen optionally:

(a) The schedule marker is displayed if the schedule marker position is more than 1, and here, the position is granted as 1, and the scheduled marker is also displayed if the scheduled marker is a negative value, and here, the position is granted as 0;

(b) The schedule marker is not displayed if the schedule marker position is more that 1 or a negative value; and

(c) The schedule marker is displayed at a certain position if the schedule marker position is more than 1 or a negative value. If the schedule marker position is more than 1, the schedule marker is displayed at a position of 1+$\alpha$, and if the schedule marker position is a negative value, the schedule marker is displayed at a position of 0-$\beta$. Here, $\alpha$ and $\beta$ are predetermined positive numbers.

The display type of the schedule marker is selected and determined based on at least one of the following differences: a difference between the present time and scheduled time; a difference between the scheduled time and estimated time of completion; and a difference between the scheduled time and estimated start time.

The progress bar generator 119 generates a reproduction guide (progress bar or seek bar) corresponding to the content reproduction. The progress bar generator 119 generates, for example, the progress bar displaying and display information to a counter adjacent thereto. The progress bar generator 119 determines a position of a slider on the progress bar based on the rate of progress of the content reproduction calculated by the rate of progress calculator 114. The progress bar generator 119 determines and allocates the content of the display of the counter to match the total length of time and position currently being reproduced calculated by the reproducing module 113. The counter is displayed to include at least one of the following patterns.

"position currently being reproduced" / "total length of time"

"remaining reproduction time" / "total length of time"

"position currently being reproduced" / "remaining reproduction time".

Then, the progress bar generator 119 determines and allocates the display of the counter to correspond to the estimated time of completion calculated by the estimated time of completion calculator 117. The progress bar generator 119 acquires certain schedule information from the schedule manager 117 and allocates the acquired schedule information on the progress bar displaying such that the information can match with the type and position of the schedule marker calculated by the schedule marker calculator 118. The certain schedule information is one or more items of schedule information selected by the operation module 121, or one or more items of schedule information generated during the content reproduction, which is detected based on the total length of time of the selected content and present time. The progress bar generator 119 detects one or more items of schedule information generated during the reproduction of the selected content based on the total length of time of the selected content and present time.

The display 120 outputs (displays) the result of the allocation above.

The display 120 displays a screen (e.g. FIG. 3) including an output of content image reproduced by the reproducing module 113, output of structural information of the progress bar displaying indicative of the progression information of the content reproduction generated by the progress bar generator 119, and output of operation input user interface (operation screen information) associated with the operation module 121.

The operation module 121 receives a user's operation such as a content selection operation to the selector 112, content reproduction operation (reproduction, pause, fast-forward, reverse, seek, and change of reproduction speed, and the like) to the reproducing module 113, and selection operation of display content (selecting a counter display format and the like) of the progress bar to the progress bar generator 119. The operation module 121 then transfers the operations as operation instructions to each of the selector 112, reproducing module 113, and progress bar generator 119. A part of the operation may be performed based on predetermined rules instead of the user's instructions.

With the above-mentioned structures functioning individually, the reproduction apparatus 101 selects the content based on the user's operation, reproduces the selected content, outputs (displays) the reproduction screen including the content image, and further outputs (displays) the reproduction guide (progress bar displaying, and the like) indicating the progression status of the reproduction corresponding to the content reproduction, and further outputs (displays) the certain schedule information associating thereof with the reproduction guide. That is, the reproduction screen includes the content image and reproduction guide with which the certain schedule information is associated.

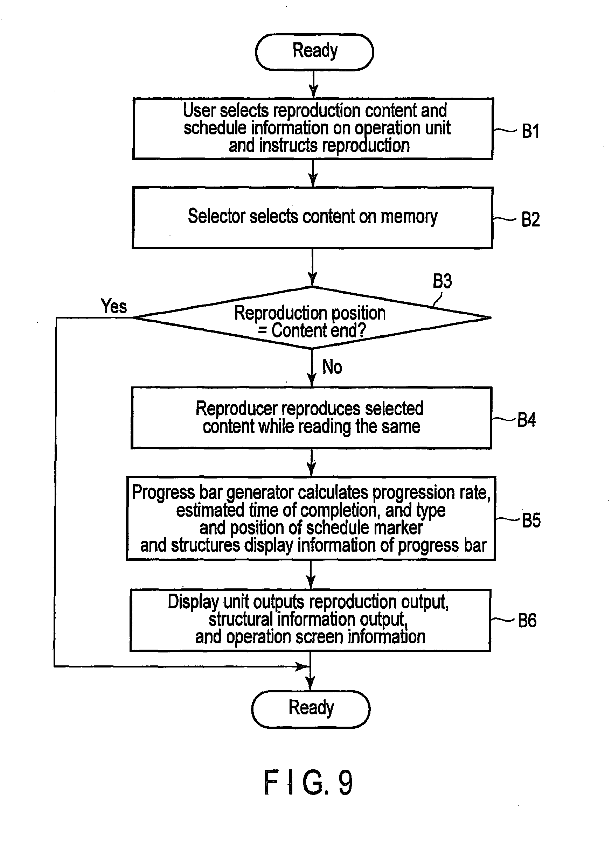

FIG. 9 illustrates a flowchart illustrating an example of the working mechanism of the reproduction apparatus 101.

The user selects the content to be reproduced and certain schedule information via the operation module 121 and instructs the reproduction of the selected content [B1]. Alternatively, the user selects the content to be reproduced via the operation module 121 and instructs the reproduction of the selected content [B1]. The selector 112 selects the content on the storage 111 [B2].

The reproducing module 113 determines whether or not the position currently being reproduced of the selected content is at the end of the content [B3]. If the position currently being reproduced has not yet arrived at the end of the content [B3-NO], the processes in [A4]-[A6] is then performed. If the position currently being reproduced has arrived at the end [B3-YES], the reproduction is terminated.

The reproducing module 113 reads and reproduces the selected content at the same time [B4]. The reproducing module 113 extracts the total length of time of the content and the position currently being reproduced at that point of time. The rate of progress calculator 114 calculates the rate of progress of the reproduction, the estimated time of completion calculator 116 calculates the estimated time when the position currently being reproduced reaches the end of the content, the schedule marker calculator 118 calculates the type and position of the schedule marker displayed corresponding to the certain schedule information, and the progress bar generator 119 structures the display information of the progress bar displaying based on the rate of progress of the reproduction, the estimated time when the position currently being reproduced reaches the end of the content, the type and position of the schedule marker [B5]. The certain schedule information is one or more items of schedule information selected by the operation module 121, or one or more items of schedule information generated during the content reproduction, which is detected based on the total length of time of the selected content and present time. The progress bar generator 119 detects one or more items of schedule information generated during the reproduction of the selected content based on the total length of time of the selected content and present time.

The display 120 displays a screen including an output of the reproducing module 113, output of structural information of the progress bar generated by the progress bar generator 119, and output of operation screen information from the operation module 121. Here, the speaker may output information related to the above-mentioned outputs [B6].

To describe a display example of the progress bar displaying, the following conditions are given.

The reproduction apparatus 101 selects content of 20 minutes duration in response to a user's operation.

The reproduction apparatus 101 starts the reproduction of the selected content at 01:00 p.m. from the start thereof at the normal speed.

The user has a schedule to go out at 01:15 p.m., and corresponding to this schedule, the reproduction apparatus 101 registers (manages) a schedule including expected time of start of 01:15 p.m. therein. The reproduction apparatus 101 can output (display) the registered schedule via a calendar display function or the like.

The estimated time of completion is displayed as follows.

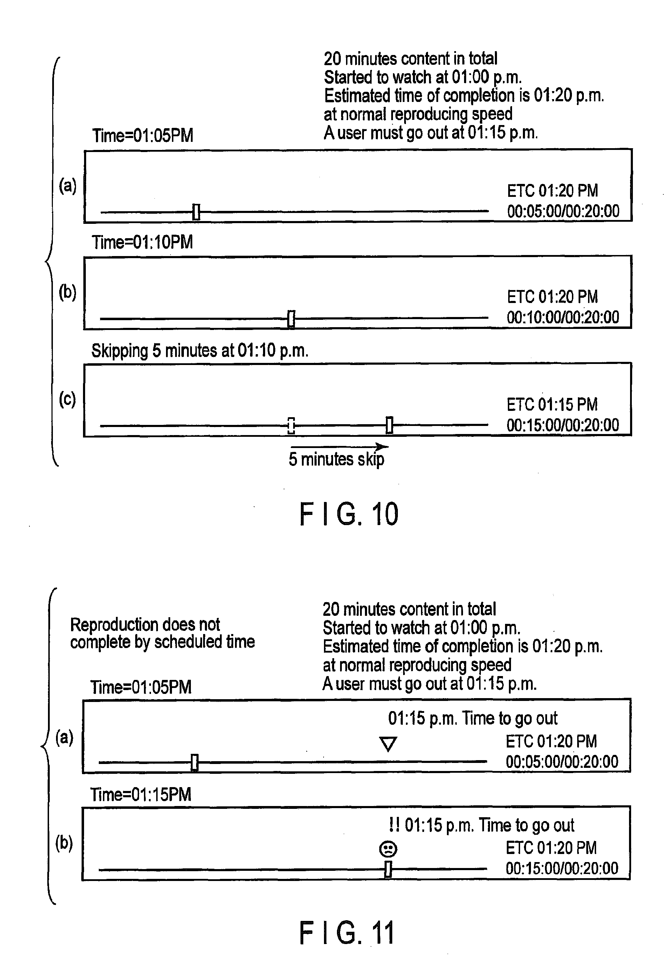

Here is considered a case where, at the point of time of 01:05 p.m. or 01:10 p.m., the reproduction apparatus 101 is continuing the content reproduction at the normal speed and displaying the progress bar displaying or seek bar displaying together with the reproduction image of the content. FIG. 10 (FIGS. 10(a), 10(b) and 10(c)) illustrates display examples of the seek bar and estimated time of completion at 01:05 p.m. or 01:10 p.m. As shown in FIG. 10(a), the reproduction apparatus 101 may display the reproduction rate of progress (position currently being reproduced) together with the total length of time or the remaining time together with the total length of time at 01:05 p.m. using the seek bar, etc., and further displays the estimated time of completion (ETC). Therein, the estimated time of completion is 01:20 p.m. Furthermore, as shown in FIG. 10(b), the reproduction apparatus 101 uses the seek bar or the like to display, at 01:10 p.m., the reproduction rate of progress (position currently being reproduced) and total length of time or the remaining time and total length of time together with the estimated time of completion. Here, the estimated time of completion is 01:20 p.m. Furthermore, as shown in FIG. 10(c), upon receipt of the fast-forward operation (of 5 minutes), the reproduction apparatus 101 uses the seek bar or the like to display, at 01:10 p.m., the reproduction rate of progress (position currently being reproduced) and total length of time or the remaining time and total length of time together with the estimated time of completion. Here, the estimated time of completion is 01:15 p.m.

The schedule marker is displayed as follows. In the following description, a case where the schedule marker and estimated time of completion are displayed together is described.

Here is considered a case where, at the point of time of 01:05 p.m. or 01:15 p.m., the reproduction apparatus 101 is continuing the content reproduction at the normal speed and displaying the progress bar displaying or seek bar displaying together with the reproduction image of the content. FIG. 11 (FIGS. 11(a), 11(b) and 11(c)) illustrates display examples of the seek bar, schedule marker, and estimated time of completion at 01:05 p.m. or 01:15 p.m. As shown in FIG. 11(a), the reproduction apparatus 101 uses the seek bar or the like to display the reproduction rate of progress (position currently being reproduced) together with the total length of time or the remaining time together with the total length of time at 01:05 p.m. and further displays the schedule marker and estimated time of completion. Therein, the reproduction start time is set to 01:00 p.m., and the estimated time of completion is set to 01:20 p.m., and the schedule marker is located at a rate of progress of 75% of the progress bar displaying. For example, the schedule marker uses an inversed triangle symbol, and the schedule start time (01:15 p.m.) and schedule name (going out) are displayed corresponding to the schedule marker.

With the schedule marker displayed on the progress bar displaying by the reproduction apparatus 101, a user can recognize that the scheduled time comes before the end of the content reproduction and further recognize how fast the scheduled time comes before the estimated time of completion. For example, when the reproduction apparatus 101 continues the content reproduction at the standard playing speed until 01:15 p.m., the position currently being reproduced and schedule marker overlap with each other as shown in FIG. 11(b) and a user can recognize that the scheduled time has come at exact 01:15 p.m.

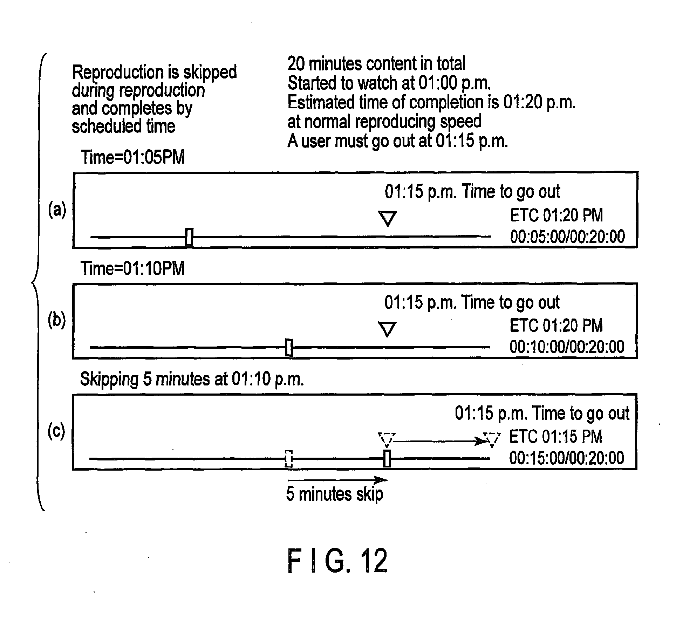

For example, in a case where the present time is 01:05 p.m. and the content reproduction does not end by 01:15 p.m. (as shown in FIG. 12(a)), if a user operates the reproduction apparatus 101 to perform 5-minute fast-forward or seek at 01:10 p.m., the estimated time of completion changes from 01:20 p.m. to 01:15 p.m. Based on this change, the display 120 changes the display from FIG. 12(b) to FIG. 12(c). That is, the slider and schedule marker move their positions, respectively. The schedule marker moves on the end of the progress bar displaying and a user can recognize that the estimated time of completion and scheduled time (schedule start time) are the same if the reproduction continues at the standard playing speed, in other words, that the content reproduction ends until the scheduled time at the standard playing speed.

As described above, the reproduction apparatus 101 displays at least the estimated time of completion or schedule marker associated with the progress bar displaying or seek bar displaying.

When the reproduction apparatus 101 does not calculate the total length of time of the selected content, a predetermined value is set as a temporary total length of time. Based on the temporary total length of time, the reproduction apparatus may execute the process described above.

As explained above, the reproduction apparatus 101 can display the estimated time of completion associated with the progress bar displaying or the like and display the schedule marker indicative of whether or not the content reproduced at that time can be played to the end by the scheduled time (schedule start time). The reproduction apparatus 101 can display both the estimated time of completion and schedule marker. Thereby, a user of the reproduction apparatus 101 can easily determine whether or not the content will be completed by the scheduled time (schedule start time). The user thereby may be prompted to shorten the content reproduction by a fast-forward or skipping operation so that the content reproduction can be terminated by the scheduled time (schedule start time) or the reproduction can be progressed to a point at which it is convenient to suspend reproduction.

For example, when the scheduled time indicates the reproduction completion time of the content played at the standard playing speed, the user can ascertain effects on the content reproduction by the fast-forward or skipping operations. If the scheduled time is a time to start a scheduled recording or scheduled reproduction (scheduled viewing) in the reproduction apparatus 101, that is, the scheduled time relates to an event which prevents both reproduction and display of the content currently being played, the reproduction apparatus 101 notifies to the user that the content currently being played cannot be reproduced to the end while the content reproduction is continuing and prompts an operation such as fast-forward, stop, or the like. If the scheduled time is a time controlled by the calendar function or associated device function to indicate the user's scheduled work, the reproduction apparatus 101 notifies that the content currently being played cannot be played to the end until the user starts the scheduled work and prompts an operation such as fast-forward, stop, or the like.

Based on the above, the reproduction apparatus 101 reproduces the content selected optionally by the user and outputs the reproduction guide (progress bar displaying or seek bar displaying) of the reproduced content together with the scheduled information associated with the reproduction guide. Thereby, the user can easily determine whether or not the reproduction of the selected content ends by the scheduled time. The user thereby can easily recognize whether or not the reproduction of the selected content will end by the scheduled time. In other words, the reproduction apparatus 101 clearly motivates the user to terminate the content reproduction by the scheduled time.

The above description has been given to the progress bar displaying or seek bar displaying indicative of the progression status of reproduction; however, a single or multiple chapters (divided by initial or terminal position of each chapter, or the like) may be displayed on the progress bar displaying or seek bar displaying. Thereby, the chapters of content and scheduled time are indicate associated with the progress bar displaying or seek bar displaying, the user can watch the content by the last chapter before the scheduled time and pause the reproduction of the content at that point.

The content to be reproduced is not limited to the recorded content. Content such as broadcast content, network distribution content, packaged content (content recorded in a medium) can be reproduced.

Here, the entire process of various information outputs (information display) including content reproduction can be executed by a software program. Thus, when the software is installed in a computer through a computer-readable storage medium storing such a software program and executed, the same advantage obtained from each embodiment is easily achievable therein.

For example, the reproduction apparatus 101 downloads the above program via an external interface unit, or the like, stores the downloaded program therein, and installs the program. Thereby, the reproduction apparatus 101 which corresponds to the aforementioned computer can easily achieve the above process based on the installed program.

The reproduction apparatus 101 may read the above program from the computer-readable storage medium, store the read program, and complete the installation of the program.

The functions explained in each of the above embodiments are not limited to structures using hardware. These functions can be also implemented by having a computer read a program describing each of the functions by the use of software. Each function may be configured by appropriately selecting software or hardware.

**Claims**

1. A reproduction apparatus (101) **characterized by** comprising:

   a selector (112) configured to select content;
   a reproducing module (113) configured to reproduce the content; and
   an output module (119, 114) configured to output a guide indicative of a relationship between a first estimated time of reproduction completion of the content and a first scheduled time of a first schedule in response to the content reproduction.

2. The reproduction apparatus of claim 1,
   **characterized in that**
   the output module outputs the guide indicative of a relationship between the reproduction time of the content, first estimated time of content reproduction completion, and first scheduled time in response to the content reproduction.

3. The reproduction apparatus of claim 2,
   **characterized in that**
   the output module outputs the guide indicative of a relationship between the reproduction time of the content, current position currently being reproduced during the reproduction time, first estimated time of content reproduction completion, and first scheduled time in response to the content reproduction.

4. The reproduction apparatus of claim 3,
   **characterized in that**
   the output module outputs a reproduction guide indicative of the reproduction time and position currently being reproduced in response to the content reproduction.

5. The reproduction apparatus of claim 4,
   **characterized in that**
   the output module outputs the reproduction guide indicative of the reproduction time, position currently being reproduced, and first estimated time of reproduction completion in response to the content reproduction.

6. The reproduction apparatus of any one of claims 1 to 5,
   **characterized in that**
   the output module outputs the guide indicative of a relationship between chapter information related to chapters of the content and the first scheduled time.

**7.** The reproduction apparatus of any one of claims 1 to 6,
**characterized in that**
the reproducing module reproduces the content at a first playing speed in response to a first reproduction instruction, and reproduces the content at a second playing speed that is faster than the first playing speed in response to a second reproduction instruction, and
the output module outputs a first reproduction guide indicative of the first estimated time of the reproduction completion of the content in response to the content reproduction at the first playing speed, and updates the first estimated time of reproduction completion to a second estimated time of reproduction completion in response to the content reproduction at the second playing speed to output a second reproduction guide indicative of the second estimated time of reproduction completion.

**8.** The reproduction apparatus of claim 7,
**characterized in that**
the output module outputs, in response to the content reproduction at the first playing speed, the first scheduled time associated with a first position on a first time base corresponding to the reproduction time and first estimated time of reproduction completion, and outputs, in response to the content reproduction at the second playing speed, the first scheduled time associated with a second position on a second time based corresponding to the reproduction time and second estimated time of reproduction completion.

**9.** The reproduction apparatus of any one of claims 1 to 8, **characterized by** further comprising:

a detector configured to detect the first schedule which occurs during the content reproduction based on the first estimated time of reproduction completion and present time.

**10.** The reproduction apparatus of any one of claims 1 to 9,
**characterized in that**
the output module displays the guide and content reproduction image.

**11.** A reproduction method **characterized by** comprising:

managing one or more schedule;
selecting content;
reproducing the content; and
outputting a guide indicative of a relationship between a first estimated time of reproduction completion of the content and a first scheduled time of a first schedule in response to the content reproduction.

**12.** A reproduction program readable by a computer to cause the computer to execute the following steps to:

manage one or more schedule;
select content;
reproduce the content; and
output a guide indicative of a relationship between a first estimated time of reproduction completion of the content and a first scheduled time of a first schedule in response to the content reproduction.

FIG. 1

Direction of reproducing order

Slider

FIG. 2

00:05:00/00:20:00

FIG. 3

**Content reproduction apparatus** 101

Storage 111 ←── Search instruction ── Selector 112 ←── Selection instruction ── Operation module 121 ← User

Content selection result ↓ / Reproduction instruction / Operation screen information ↓

Content entity ──→ Reproducing module 113 ←── / Reproduction output ──→ Display 120

Total time length, reproduction time position ↓

Progression rate calculator 114 ── Progression rate, total time length, reproduction time position ──→

Progress bar arrangement result ↑

Progress bar generator 119

Clock module 115

F I G. 4

EP 2 808 871 A1

20 minutes content in total
Started to watch at 01:00 p.m.
Estimated time of completion is 01:20 p.m.
at normal reproducing speed
A user must go out at 01:15 p.m

Time=01:05PM

(a)

Time=01:05PM

(b)

00:05:00/00:20:00

Reproduction position  Content length

Time=01:05PM

(c)

Remaining
00:15:00/00:20:00

Content length

FIG. 6

Remaining
00:15:00/00:20:00

20 minutes content in total
Started to watch at 01:00 p.m.
Estimated time of completion is 01:20 p.m.
at normal reproducing speed
A user must go out at 01:15 p.m

5 minutes content
remaining for next
scheduled time

Time=01:15PM

Remaining
00:05:00/00:20:00

Content length

FIG. 7

**FIG. 8**

```
                        ┌─────────────┐
                        │    Ready    │
                        └─────────────┘
                               │
                               ▼
        ┌───────────────────────────────────────────────┐
        │   User selects reproduction content and        │
        │   schedule information on operation unit        │── B1
        │         and instructs reproduction             │
        └───────────────────────────────────────────────┘
                               │
                               ▼
        ┌───────────────────────────────────────────────┐
        │       Selector selects content on memory        │── B2
        └───────────────────────────────────────────────┘
                               │
                               ▼                     B3
  Yes           ◇─────────────────────────────────◇
 ◄──────────────    Reproduction position
                    = Content end?
                ◇─────────────────────────────────◇
                               │ No
                               ▼
        ┌───────────────────────────────────────────────┐
        │       Reproducer reproduces selected            │── B4
        │        content while reading the same           │
        └───────────────────────────────────────────────┘
                               │
                               ▼
        ┌───────────────────────────────────────────────┐
        │ Progress bar generator calculates progression rate,│
        │    estimated time of completion, and type       │── B5
        │        and position of schedule marker          │
        │ and structures display information of progress bar│
        └───────────────────────────────────────────────┘
                               │
                               ▼
        ┌───────────────────────────────────────────────┐
        │   Display unit outputs reproduction output,     │
        │        structural information output,           │── B6
        │      and operation screen information           │
        └───────────────────────────────────────────────┘
                               │
                               ▼
                        ┌─────────────┐
                        │    Ready    │
                        └─────────────┘
```

# FIG. 9

20 minutes content in total
Started to watch at 01:00 p.m.
Estimated time of completion is 01:20 p.m.
at normal reproducing speed
A user must go out at 01:15 p.m.

Time=01:05PM

(a)

ETC 01:20 PM
00:05:00/00:20:00

Time=01:10PM

(b)

ETC 01:20 PM
00:10:00/00:20:00

Skipping 5 minutes at 01:10 p.m.

(c)

ETC 01:15 PM
00:15:00/00:20:00

5 minutes skip

# F I G. 10

20 minutes content in total
Started to watch at 01:00 p.m.
Estimated time of completion is 01:20 p.m.
at normal reproducing speed
A user must go out at 01:15 p.m.

Reproduction does not
complete by scheduled time

Time=01:05PM

(a)

01:15 p.m. Time to go out
▽          ETC 01:20 PM
00:05:00/00:20:00

Time=01:15PM

(b)

!! 01:15 p.m. Time to go out
☺          ETC 01:20 PM
00:15:00/00:20:00

# F I G. 11

Reproduction is skipped
during reproduction
and completes by
scheduled time

20 minutes content in total
Started to watch at 01:00 p.m.
Estimated time of completion is 01:20 p.m.
at normal reproducing speed
A user must go out at 01:15 p.m.

Time=01:05PM

(a)

01:15 p.m. Time to go out
▽ ETC 01:20 PM
00:05:00/00:20:00

Time=01:10PM

(b)

01:15 p.m. Time to go out
▽ ETC 01:20 PM
00:10:00/00:20:00

Skipping 5 minutes at 01:10 p.m.

(c)

01:15 p.m. Time to go out
▽————▷▽ ETC 01:15 PM
00:15:00/00:20:00

5 minutes skip

# F I G. 12

Europäisches
Patentamt
European
Patent Office
Office européen
des brevets

## EUROPEAN SEARCH REPORT

Application Number

EP 13 19 0968

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 077 435 A1 (LG ELECTRONICS INC [KR]) 8 July 2009 (2009-07-08) * paragraphs [0130], [0131]; figures 1, 11,12 * | 1-12 | INV. G11B27/34 G11B27/36 |
| A | WO 2011/109439 A2 (MICROSOFT CORP [US]) 9 September 2011 (2011-09-09) * paragraphs [0027] - [0037] * | 1-12 | |
| A | EP 1 923 889 A1 (SAMSUNG ELECTRONICS CO LTD [KR]) 21 May 2008 (2008-05-21) * paragraphs [0003], [0051] - [0057]; figures 1-4 * | 1-12 | |
| A | US 7 313 808 B1 (GUPTA ANOOP [US] ET AL) 25 December 2007 (2007-12-25) * column 8, line 17 - column 10, last line; figure 4 * | 1-12 | |

TECHNICAL FIELDS
SEARCHED      (IPC)

G11B

The present search report has been drawn up for all claims

| Place of search | Date of completion of the search | Examiner |
|---|---|---|
| The Hague | 17 April 2014 | Bruma, Cezar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 19 0968

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2014

| Patent document cited in search report | | Publication date | Patent family member(s) | | Publication date |
|---|---|---|---|---|---|
| EP 2077435 | A1 | 08-07-2009 | CN | 101478714 A | 08-07-2009 |
| | | | EP | 2077435 A1 | 08-07-2009 |
| | | | KR | 20090075495 A | 08-07-2009 |
| | | | US | 2009177376 A1 | 09-07-2009 |
| WO 2011109439 | A2 | 09-09-2011 | CN | 102782669 A | 14-11-2012 |
| | | | EP | 2542981 A2 | 09-01-2013 |
| | | | US | 2011218656 A1 | 08-09-2011 |
| | | | WO | 2011109439 A2 | 09-09-2011 |
| EP 1923889 | A1 | 21-05-2008 | CN | 101184191 A | 21-05-2008 |
| | | | EP | 1923889 A1 | 21-05-2008 |
| | | | KR | 20080044681 A | 21-05-2008 |
| | | | US | 2008118219 A1 | 22-05-2008 |
| US 7313808 | B1 | 25-12-2007 | NONE | | |

EPO FORM P0459